# EUROPEAN PATENT APPLICATION

(11) **EP 1 826 549 A2**
(43) Date of publication of application: **29.08.2007**
(21) Application number: 07102943.3
(22) Date of filing: 23.02.2007
(51) Int. Cl.: G01N 1/40, G01N 22/00

(54) **Filtration apparatus and associated method for microwave-assisted chemistry**

(30) Priority: 24.02.2006 US 361653
(71) Applicant: CEM Corporation, Matthews, NC 28106-0200 (US)
(72) Inventor: Revesz, Robert N., Monroe, NC 28112 (US)
(74) Representative: Bankes, Stephen Charles Digby

(57) **Abstract**

A method and apparatus are disclosed that are useful in bench top sample preparation and filtration techniques, including those related to microwave assisted extraction and partial digestion. In one aspect the method includes the steps of positioning a microwave-transparent matrix removal tool (40) in a microwave transparent reaction vessel (37) adding a matrix-based composition to the microwave reaction vessel containing the removal tool, applying microwave radiation to the reaction vessel, the matrix-based composition, and the matrix removal tool, and removing the matrix based composition from the reaction vessel using the matrix removal too1. In another aspect the method includes the steps of positioning a matrix based composition that includes at least some liquid in a filter vessel, and applying a moderate over-pressure to the composition upstream of the filter to accelerate the movement of liquid through the filter.

## Description

The present invention relates to laboratory and bench top sample preparation and filtration techniques and in particular relates to techniques that are helpful in carrying out microwave assisted chemistry techniques, including extraction and partial digestion, that typically require a filtration step.

Extraction is a well-understood technique for both analyzing and obtaining specific compositions from mixtures or matrices. Extraction is based upon the preference for particular compositions to be soluble in particular solvents, or more soluble in a first solvent than in a second solvent. When a matrix containing a material of interest is contacted with an appropriate solvent, the composition will tend to move from the matrix into the solvent. If the solvent can be separated from the matrix, it will thus carry with it some or all of the composition of interest. The solvent can then be removed to obtain the composition of interest, or the solution of the composition in the solvent can be subjected to further solvent-based testing or analysis.

Digestion refers to the use of relatively robust solvents, typically strong acids or combinations of acids, to dissolve a solid sample so that the constituent items, typically elements, can be identified. If possible, the goal of digestion is to dissolve the sample completely into the acids for ease of later handling and analysis. In partial digestion (sometimes referred to as "leaching"), however, only a portion of the sample will dissolve and thus leaves behind a solid residue. In most circumstances, this residue must be rinsed and filtered in order to recover the relevant items for identification.

As used herein, the term "matrix" refers to a wide variety of compositions and mixtures of compositions. These typically include mixtures of solids and liquids or liquids and liquids, and can potentially include gases.

Extraction and digestion are accordingly useful in a wide variety of analysis scenarios. For example, samples such as soil (or related solid materials), animal or plant materials, or certain liquids can be subjected to extraction techniques to identify the presence, and potentially the amount, of a given composition of interest.

As a more specific example, in soil testing, extraction is typically used (alone or in conjunction with other tests) to identify the presence and amount of materials that must be either limited or eliminated in accordance with environmental statutes and regulations. In the United States, these include (but are not limited to) statutes such as THE SOLID WASTE DISPOSAL ACT (42 USC § 6901) and related regulations; e.g. 40 CFR Part 261*ff*, IDENTIFICATION AND LISTING OF HAZARDOUS WASTE.

For entities that may be producing significant amounts of such compounds of interest, regular testing is thus either desirable or required by law or both. Extraction is one technique for identifying the presence of such compounds and potentially their amounts. Nevertheless, as is the case with a number of chemical or physical phenomena, the known propensity of a given composition to migrate into a particular solvent does not imply that the migration will take place immediately, or even quickly. Stated differently, extraction may represent a relatively slow technique in many circumstances.

Pare, U.S. Patent No. 5,338,557 describes some exemplary microwave extraction techniques. As set forth therein, microwave techniques can significantly accelerate certain extraction techniques. No. 5,338,557 includes some examples in which a microwave extraction carried out in 20 seconds is equivalent to a two-hour steam distillation extraction or a six-hour Soxhlet extraction. Accordingly, in addition to certain functional advantages, microwave assisted extraction can greatly reduce the time required for any one process and thus increase the number of tests that can be carried out in any given period of time.

Microwave assisted digestion is described in, for example, U.S. Patents Nos. 5,420,039; 5,215,715; 4,882,286; 4,877,624; and 4,835,354. These patents are, of course, exemplary rather than limiting of digestion techniques.

There are, however, some practical considerations that must be taken into account. First, because extraction deals with the contact of a solvent with a matrix, the solvent and the matrix must typically be separated from one another even after the composition of interest has been extracted from the matrix into the solvent. When the matrix is a mixed material such as soil, sludge or the like, proper extraction results require recovering all of the solvent and separating it from all of the matrix. In addition, it has been found that rinsing the matrix with the solvent increases the yield of extracted composition and thus increases the accuracy of any resulting measurement.

Nevertheless, obtaining complete removal and separation of matrix samples can present practical hurdles that reduce the resulting accuracy of the extraction-based measurement. In particular, extraction and partial digestion almost always require at least one filtration step. If filtration is slow or cumbersome or both, it can slow the overall rate of an extraction procedure. In turn, a slow filtration step can reduce or eliminate the rate advantages of microwave-assisted processes.

Typical filtration techniques that are used in conjunction with extraction or partial digestion include gravity filtration, vacuum filtration, and syringe filtration. Gravity filtration is slow. Vacuum filtration is faster than gravity filtration, but can forfeit solvent, requires sealed collection vessels, and can create an undesired cooling effect (with resulting undesired condensation of ambient water vapor). Syringe filtration tends to be limited to relatively small samples and has a tendency to generate clogs.

Accordingly, a need exists for filtration techniques that are rapid enough to complement microwave-assisted techniques, and that are easily incorporated with techniques such as extraction and partial digestion.

In one aspect, the invention is a method of microwave assisted extraction. In this aspect, the invention includes the steps of positioning a microwave-transparent matrix removal tool in a microwave transparent reaction vessel, adding a matrix-based composition to the microwave reaction vessel containing the removal tool, applying microwave radiation to the reaction vessel, the matrix-based composition, and the matrix removal tool, and removing the matrix-based composition from the reaction vessel using the matrix removal tool.

In another aspect, the invention is a filtration method for improving the separation yield of matrix based compositions. In this aspect the invention includes the steps of positioning a matrix based composition that includes at least some liquid in a filter vessel, and applying a moderate over-pressure to the composition upstream of the filter to accelerate the movement of liquid through the filter.

In yet another aspect, the invention is a vessel assembly for microwave assisted treatment of matrix-based compositions. The vessel assembly includes a microwave transparent reaction vessel and a microwave transparent matrix removal tool in the reaction vessel. The tool includes a handle and a plunger at one terminal end of the handle, with the plunger conforming substantially to the cross sectional geometry of the reaction vessel for moving matrix based compositions along the interior of the vessel and out of the vessel as the handle is manipulated to pull the plunger from the vessel.

In yet another aspect, the invention is a filtration system for microwave related extraction techniques and related tasks. The system includes a funnel support, a funnel resting in the funnel support, a filter cup resting in the funnel opposite the funnel support, an over-pressure cap for engaging the filter cup opposite the funnel, and a pump in fluid communication with the over-pressure cap for supplying a moderate over pressure to the filter cup for accelerating the movement of solvent through the filter cup and the funnel.

The foregoing and other objects and advantages of the invention and the manner in which the same are accomplished will become clearer based on the followed detailed description taken in conjunction with the accompanying drawings, wherein:.

Figure 1 is a perspective view of filtration system according to the present invention.

Figure 2 is a cross-sectional view of the filtration system taken along lines 2-2 of Figure 3.

Figure 3 is a top plan view of portions of a filtration system according to the present invention.

Figure 4 is a perspective view of a filter cup according to the present invention.

Figure 5 is an exploded view of a filter cup according to the present invention.

Figure 6 is a cross-sectional view of a funnel used in the present invention.

Figure 7 is a perspective view of a reaction vessel and matrix removal tool according to the present invention.

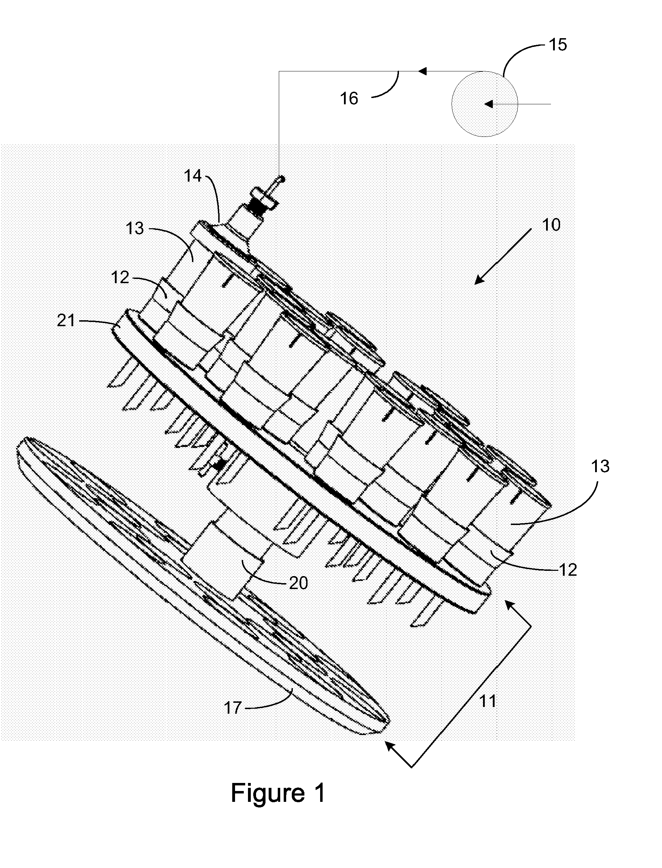

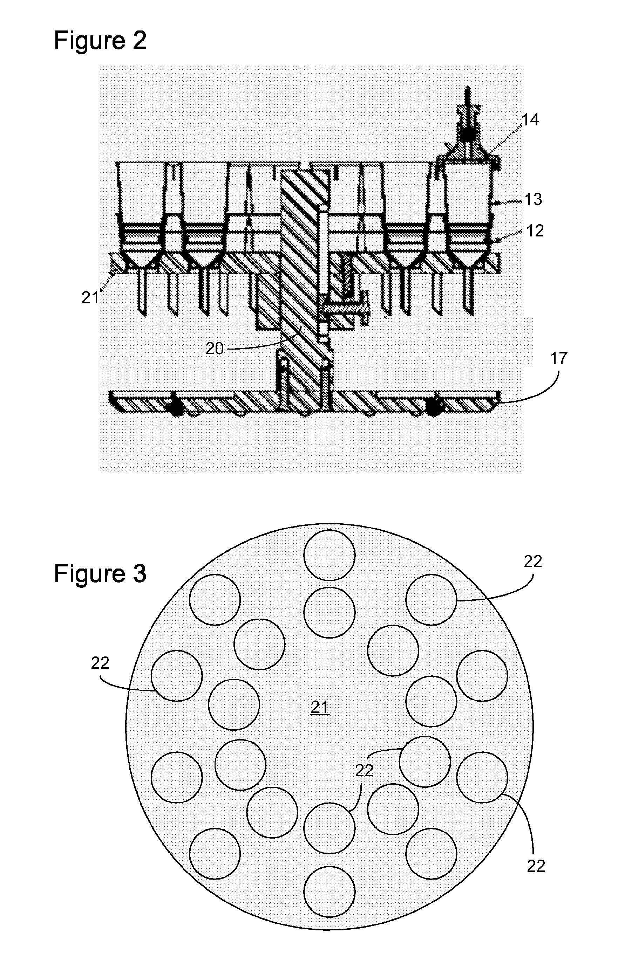

Figure 1 is a perspective view of a filtration system according to the present invention broadly designated at 10. Related aspects of the filtration system are illustrated in Figures 2 through 7. The perspective view of Figure 1 illustrates a funnel support designated by the brackets 11 and a funnel 12 resting in the funnel support 11. A filter cup 13 rests in the funnel 12 opposite the funnel support 11. And over-pressure cap 14 engages the filter cup 13 opposite the funnel 12. A gas pump schematically designated at 15 is in communication with the over-pressure cap 14 through a fluid line (shown schematically at 16) for supplying a moderate overpressure of gas to the filter cup 13 for accelerating the movement of a liquid, typically a solvent, through the filter cup 13 and the funnel 12. It will be understood that a tank or other source of compressed gas, when properly regulated, is the functional equivalent of the guest pomp described herein.

Figure 1 also illustrates that in exemplary embodiments the funnel support 11 includes a base 17, a pedestal or pedestal assembly 20, a table 21 supported by the pedestal 20 and the base 17 and an opening 22 (Figure 3) in the table 21 for receiving the funnel 12. As further illustrated in Figure 1, the table 21 typically includes a plurality of openings 22 (twenty are illustrated) in the table 21 for receiving a plurality of funnels 12.

In exemplary embodiments the base 17 and the table 21 are both circular, the funnels 12 have circular cross-sections, and the funnel receiving openings 22 in the table 21 are likewise circular.

Figure 2 is a cross-sectional view of the elements illustrated in Figure 1 including the base 17, the pedestal 20, the table 21, the funnels 12, the filter cups 13, and the over- pressure cap 14.

Figure 3 is a schematic top plan view of the table 21 and showing the plurality of openings 22 into which the funnels 12 rest.

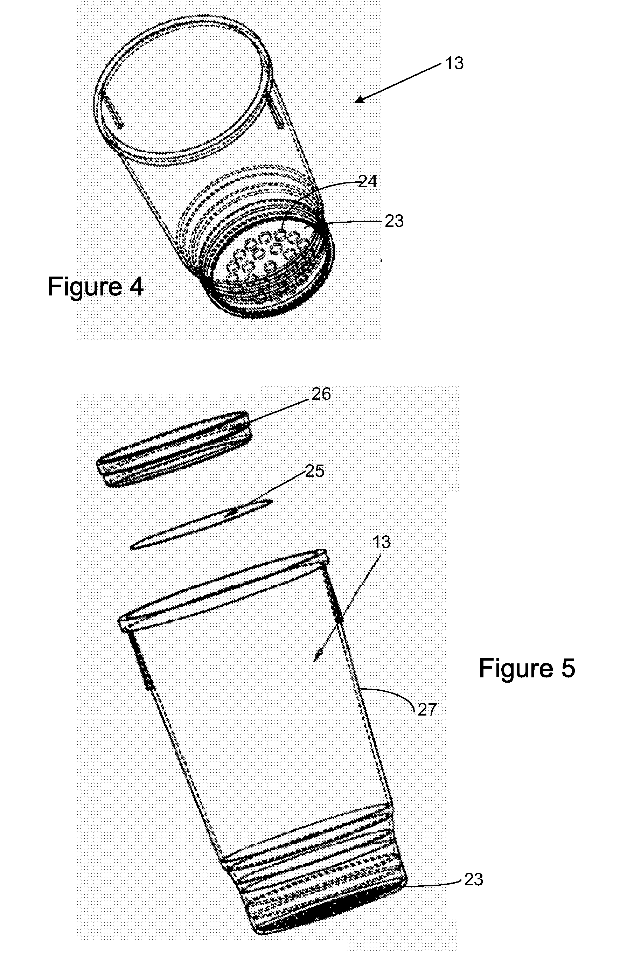

Figures 4 and 5 illustrate additional details about the filter cup 13. The cup 13 includes a foramenous (perforated, fenestrated) base 23 with a plurality of openings 24. As shown in the exploded view of Figure 5, a filter medium 25 is supported by the base 23 with a retainer illustrated as the ring 26 for maintaining the filter medium 25 on the base 23 in the cup 13. The cup 13 has tapering walls 27 and a cylindrical cross-section. The filter medium is also typically circular so that the retaining ring 26 is likewise circular for maintaining the filter medium 25 against the base 23. The filter medium 25 typically comprises (but is not limited to) paper, glass fibers, or polymer fabrics. It will be understood that the use of three pieces (cup, filter, retaining ring) is optional rather than necessary and that a unitary structure is similarly acceptable.

Because the filter cup 13 is a separate item from the funnel 12, it can conveniently be formed of a polymer such as polyethylene or polypropylene and the filter medium 25 can be selected to have a given porosity based on the necessary or expected filtration. The ability to incorporate these relatively inexpensive and well-understood materials makes the filter cup 13 ideally suited as a single-use and disposable item. It will be understood, of course, that the invention does not require a low cost or disposable filter cup but that the availability of the design and materials makes it ideal for such purpose. In addition to convenience, the use of low-cost disposable materials provides the opportunity for avoiding contamination from sample to sample, and saves the step of cleaning more permanent materials. It will nevertheless be understood that the invention still offers advantages when more permanent materials (such as fritted-bottom glass filters) are used.

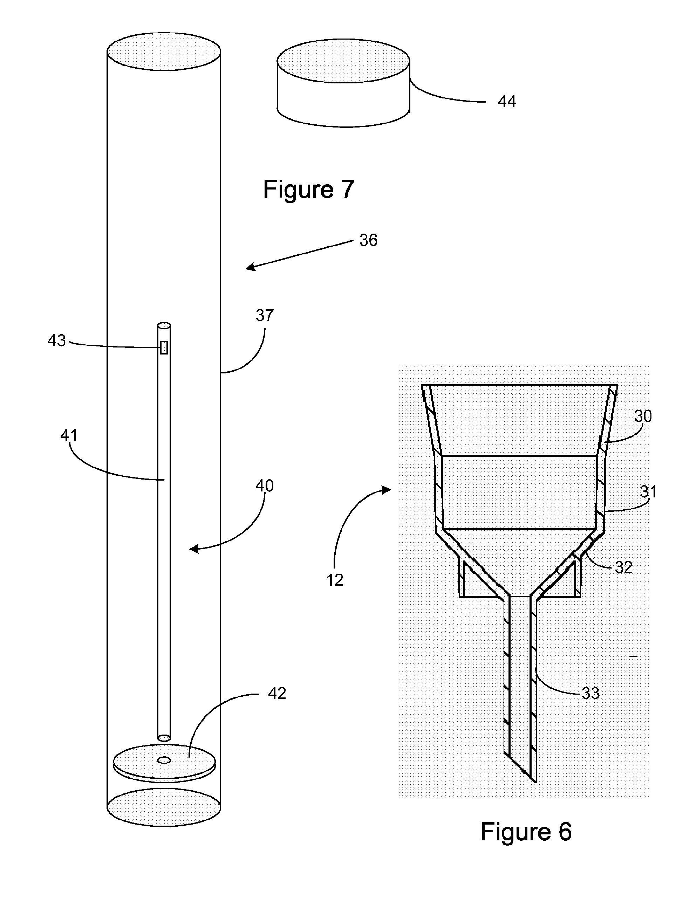

Figure 6 illustrates additional details about the funnel 12. The funnel 12 includes a first tapered wall portion 30, a vertical wall portion 31, and a conical portion 32 leading to the drain portion 33. The taper of the funnel wall portion 30 is substantially similar, and in some cases identical, to the taper of the wall 27 of the filter cup 13. This helps maintain the cup 13 in the funnel 12 during the filtration steps.

It will be understood that although the illustrations herein show the cup 13 and the funnel 12 as separate parts, they can also form a single piece. In many circumstances, however, separating these items offers the opportunity noted above to dispose of the filter cup 13 at lower cost than disposing of a unitary cup and funnel assembly.

The filtration system accordingly lends itself to a method of improving the separation yield of matrix based compositions. In this aspect, the invention comprises the steps of positioning a matrix based composition that includes at least some liquid in a filter vessel, and then applying a moderate over-pressure to the composition upstream of the filter to accelerate the movement of liquid through the filter. The amount of pressure can be best expressed in terms of the pump used. For example, a home aquarium pump such as the Rena® Air 200 (which can produce 200 millibar of pressure) is entirely suitable, as are its equivalents. In general, a moderate over-pressure will increase the rate at which liquid will be filtered from the matrix, but will not adversely affect the process or the materials. For example, the moderate over-pressure will not splash liquid or solid from the filter cup nor generate any other undesired physical or chemical effects.

The method can further comprise the step of rinsing the filtered composition with a solvent, in many cases the solvent being the same as the liquid in the original matrix, and re-applying the moderate over-pressure to the composition upstream of the filter.

As discussed with respect to the apparatus, the method most frequently comprises positioning a plurality of matrix based composition samples in a respective plurality of filter vessels and thereafter sequentially applying the moderate over-pressure to each composition in each respective filter vessel. As with respect to the apparatus, the step of applying the overpressure comprises capping the filter vessel and supplying a fluid flow of an inert gas to the cap. As used herein, the term "inert" refers to the relationship between the gas and the matrix based composition rather than to the inert or noble gases of the periodic table, although such gases could be appropriate. In many cases, the inert gas can be nitrogen or simply ambient air.

The method and apparatus provide the opportunity to filter the same matrix based composition in each of the respective plurality of filter vessels or the opportunity to filter at least two different matrix based compositions in at least two of the respective filter vessels. Potentially, a different composition can be filtered in each of the plurality of filter vessels.

As another advantage, in most embodiments, the over-pressure cap 14 is never fixed (e.g., threaded or clamped) to the filter cups 13 or to the funnels 12. Instead, the cap 14 need only be placed against the cup 13 or funnel 12 to carry out the intended purpose. This provides the opportunity to move the overpressure cap 14 quickly between and among the cups 13, thereby providing another increase in the overall filtration rate. In general, the overpressure cap 14 has the same diameter as the upper lip of the filter cup 13 in order to engage it efficiently. The overpressure cap 14 can also include a washer or equivalent item to provide some slight compression between the cap 14 and cup 13 during the application of the moderate over pressure.

Figure 7 illustrates a vessel assembly that is additionally useful in conjunction with the invention. The vessel assembly is broadly designated at 36 and includes a microwave transparent reaction vessel 37 and a microwave transparent matrix removal tool 40 in the vessel 37. The tool 40 includes a handle 41 and a plunger 42 (Figure 7 shows these as exploded) at one end of the handle 41. The plunger 42 conforms substantially to the cross-sectional geometry of the reaction vessel 37 for moving matrix based compositions along the interior of the vessel 37 and out of the vessel 37 as the handle 41 is manipulated to pull the plunger 42 from the vessel 37. In that regard, Figure 7 illustrates a handle with an eyelet 43 which can be used in conjunction with a separate handle or wire to pull the tool 40 from the vessel 37. Other handle designs can be incorporated including those that are large enough to be reached with an operator's hand and pulled manually.

The vessel 37 is typically formed of glass, quartz, or an appropriate polymer in order to maintain transparency with respect to microwave radiation. Similarly, the tool 40 is likewise formed of glass, quartz or polymers for the same purpose. In order to be as robust as possible in use, however, the tool 40 and the vessel 37 are typically formed of a robust polymer such as polytetrafluoroethylene (PTFE).

As illustrated in Figure 7, the reaction vessel 37 has a circular cross-section and (in some cases) includes a slight taper to the vessel walls based upon the method of manufacture. When the reaction vessel 37 has a circular cross-section the plunger 42 will likewise be circular.

If desired or necessary, the vessel assembly can further include a cap 44 for sealing the vessel 37 and its contents during the application of microwave radiation. Most typically, the cap 44 is threaded onto the vessel 37, although in other circumstances, it can be clamped in a manner that allows access pressure to be released in controlled fashion (see, e.g., commonly assigned U.S. Patent No. 6,863,871).

The vessel assembly 36 similarly provides an advantageous method of carrying out microwave assisted extraction or partial digestion. In the method, the microwave transparent matrix removal tool 40 is placed in the microwave transparent reaction vessel 37. A matrix based composition is added to the reaction vessel 37 after the removal tool 40 is in place. Microwave radiation is then applied to the reaction vessel, to the matrix based composition, to the solvent or acid that is typically present, and to the matrix removal tool. The matrix based composition is then removed from the reaction vessel using the matrix removal tool. Those familiar with extraction and partial digestion will understand, of course, that for solvent-solvent extraction or complete digestion, neither the tool nor the filtration system will be required because solids do not form any part of the resulting sample. Thus, the vessel assembly 36 and the filtration system broadly designated at 10 complement each other because they both provide advantages for solvent-solid extraction and partial digestion.

As set forth with respect to the apparatus, the vessel 37 can be sealed with the cap 44 if desired or necessary before applying microwave radiation to the vessel 37. As set forth with respect to other aspects of the invention, the matrix based composition will typically include a solvent and at least some solids.

In exemplary embodiments, the method will comprise positioning a plurality of microwave transparent matrix removal tools in a respective plurality of microwave transparent reaction vessels with one tool in each vessel. A portion of a matrix based composition is then added to each of the reaction vessels, and then microwave radiation is applied concurrently to all of the reaction vessels, their enclosed compositions, and their respective matrix removal tools. As with respect to other embodiments of the invention, the method can comprise adding the same matrix based composition to each of the plurality of vessels or adding different compositions to at least two, and potentially all, of the plurality of vessels. When the reaction is complete, the tool 40 can be used to transfer the removed matrix based composition to a filter, and in exemplary embodiments, to the filtration system described herein.

## Claims

1. A method of sample preparation that is useful in techniques such as microwave assisted extraction and partial digestion, the method comprising:
positioning a microwave-transparent matrix removal tool in a microwave transparent reaction vessel;
adding a matrix-based composition to the microwave reaction vessel containing the removal tool;
applying microwave radiation to the reaction vessel, the matrix-based composition, and the matrix removal tool; and
removing the matrix based composition from the reaction vessel using the matrix removal tool.

2. A method according to claim 1 comprising sealing the reaction vessel with the tool inside prior to the step of applying microwave radiation to the vessel.

3. A method according to claim 1 or claim 2 wherein the step of adding the matrix based composition comprises adding a composition that includes a solvent and at least some solids.

4. A method according to any preceding claim comprising:
positioning a plurality of microwave transparent matrix removal tools in a respective plurality of microwave transparent reaction vessels with one tool in each vessel;
adding a portion of the matrix based composition to each of the respective reaction vessels; and
concurrently applying microwave radiation to all of the reaction vessels, their enclosed compositions and their respective matrix removal tools.

5. A method according to Claim 4 comprising adding the same matrix based composition to each of the plurality of vessels.

6. A method according to Claim 4 comprising adding different compositions to at least two of the plurality of vessels.

7. A method according to any preceding claim further comprising transferring the removed matrix based composition to a funnel filter.

8. A filtration method for improving the separation yield of matrix based compositions, the method comprising:
positioning a matrix based composition that includes at least some liquid in a filter vessel; and
applying a moderate over-pressure to the composition upstream of the filter to accelerate the movement of liquid through the filter.

9. A filtration method according to claim 8 further comprising the step of rinsing the filtered composition with a solvent and re-applying the moderate over pressure to the composition upstream of the filter.

10. A method according to claim 8 or claim 9 wherein the step of applying the over pressure comprises capping the filter vessel and supplying a fluid flow of an inert gas to the cap.

11. A method according to any one of claims 8 to 10 comprising:
positioning a plurality of matrix based compositions samples in a respective plurality of filter vessels; and
thereafter sequentially applying the moderate over pressure to each composition in each respective filter vessel.

12. A method according to claim 11 comprising positioning substantially the same matrix based composition in each of the respective plurality of filter vessels.

13. A method according to claim 11 comprising positioning at least two different matrix based compositions in at least two of the respective plurality of filter vessels.

14. A vessel assembly (36) for microwave assisted treatment of matrix-based compositions; said vessel assembly comprising:
a microwave transparent reaction vessel (37); and
a microwave transparent matrix removal tool (40) in said reaction vessel;
said tool including a handle (41) and a plunger (42) at one terminal end of said handle, said plunger conforming substantially to the cross sectional geometry of said reaction vessel for moving matrix based compositions along the interior of said vessel and out of said vessel as said handle is manipulated to pull said plunger from said vessel.

15. A vessel assembly according to claim 14 wherein said microwave transparent reaction vessel (37) is made of a material selected from glass, quartz, and polymers.

16. A vessel assembly according to claim 14 or claim 15 wherein said microwave transparent matrix removal tool (40) is made of a material selected from glass, quartz, and polymers.

17. A vessel assembly according to claim 16 wherein said removal tool (40) comprises a fluorinated polymer.

18. A vessel assembly according to any one of claims 14 to 17 wherein said reaction vessel (37) has a circular cross section.

19. A vessel assembly according to Claim 18 wherein said plunger (42) is circular.

20. A vessel assembly according to any one of claims 14 to 19 and further comprising a cap (44) for said reaction vessel (37) for sealing the vessel and its contents during the application of microwave radiation.

21. A filtration system (10) for laboratory sample preparation and related tasks, said system comprising:
a funnel support (11);
a funnel (12) resting in said funnel support;
a filter cup (13) resting in said funnel opposite said funnel support;
an over-pressure cap (14) for engaging said filter cup opposite said funnel; and
a source (15) of pressurized gas in communication with said over-pressure cap for supplying a moderate over pressure to said filter cup for accelerating the movement of solvent through said filter cup and said funnel.

22. A filtration system according to the claim 21 wherein said filter cup (13) comprises:
a foramenous base (23);
a filter medium (25) supported by said base; and
a retainer (26) for maintaining said filter medium on said base in said filter cup.

23. A filtration system according to claim 22 wherein:
said filter cup (13) has a cylindrical cross-section;
said filter medium (25) is circular; and
said retainer (26) comprises a retaining ring for maintaining said circular filter medium against said base.

24. A filtration system according to claim 22 or claim 23 wherein said filter medium comprises paper.

25. A filtration system according to any one of claims 21 to 24 wherein said funnel support (11) comprises:
abase (17);
a pedestal (20);
a table (21) supported by said pedestal and said base; and
an opening (22) in said table for receiving said funnel.

26. A filtration system according to claim 25 comprising a plurality of openings (22) in said table (21) for receiving a plurality of funnels (12).

27. A filtration system according to claim 26 wherein:
said base (17) and said table (21) are both circular;
said funnels (12) have circular cross sections; and
said funnel-receiving openings (22) in said table are circular.

28. A filtration system according to claim 21 wherein said pressurized gas source (15) comprises an air pump.

29. A method of sample preparation that is useful in techniques such as microwave assisted extraction and partial digestion, the method comprising:
positioning a microwave-transparent matrix removal tool (40) in a microwave transparent reaction vessel (37);
adding a matrix-based composition that includes at least some liquid to the microwave reaction vessel containing the removal tool;
applying microwave radiation to the reaction vessel, the matrix-based composition, and the matrix removal tool;
removing the matrix based composition from the reaction vessel using the matrix removal tool;
transferring the matrix based composition to a filter vessel (13); and
applying a moderate over-pressure to the composition upstream of the filter to accelerate the movement of liquid through the filter.
